# EUROPÄISCHE PATENTANMELDUNG

(11) **EP 2 151 648 A1**
(43) Veröffentlichungstag der Anmeldung: **10.02.2010**
(21) Anmeldenummer: 09166953.1
(22) Anmeldetag: 31.07.2009
(51) Int. Cl.: F25D 29/00, G05B 19/042

(54) **Haushaltsgerät mit vereinfachter Wartung**

(30) Priorität: 05.08.2008 DE 102008041018
(71) Anmelder: BSH Bosch und Siemens Hausgeräte GmbH, 81739 München (DE)
(72) Erfinder: Athanasiou, Athanasios, 89537, Giengen (DE)

(57) **Zusammenfassung**

Ein Haushaltsgerät hat einen Anzeigeschirm (6) zum Anzeigen von Werten von Betriebsparametern des Haushaltsgeräts und wenigstens ein Eingabemittel (27-32) zum Festlegen eines Sollwerts der Betriebsparameter sowie zum Umschalten zwischen wenigstens zwei Betriebsmodi, die wenigstens einen Normalbetriebsmodus und einen Wartungsbetriebsmodus umfassen. Die Menge der auf dem Anzeigeschirm (6) anzeigbaren Betriebsparameter ist im Wartungsbetriebsmodus größer als im Normalbetriebsmodus.

## Beschreibung

Die vorliegende Erfindung betrifft ein elektrisches Haushaltsgerät mit vereinfachter Wartung und Fehlersuche im Störungsfall.

Bei herkömmlichen aus diskreten Schaltungskomponenten aufgebauten elektrischen Haushaltsgeräten ist es im Störungsfall, sofern das Störungsbild nicht bereits einen eindeutigen Rückschluss auf die Ursache der Störung zulässt, erforderlich, elektrische Signale an verschiedenen Stellen zwischen den diskreten Komponenten zu erfassen und anhand eines Vergleichs dieser Signale mit einer erwarteten Signalform auf die Ursache der Störung rückzuschließen. Mit fortschreitender Integration der Schaltungskomponenten wird ein solcher Ansatz mangels geeigneter zugänglicher Messpunkte immer weniger praktikabel. Es hat sich daher zur Fehlerdiagnose in solchen Geräten die Verwendung von Diagnosegeräten eingebürgert, die an eine für sie vorgesehene Schnittstelle des zu untersuchenden Haushaltsgeräts anschließbar sind, um aus diesem gespeicherte oder in Echtzeit aufgenommene Datenwerte auszulesen und einer Bedienungsperson anzuzeigen. Ein Haushaltsgerät, bei dem dieser Ansatz verfolgt wird, ist zum Beispiel aus DE 103 58 732 A1 bekannt.

Dieser Ansatz ermöglicht zwar unter günstigen Bedingungen eine schnelle Fehlerdiagnose, er hat jedoch den inhärenten Nachteil, dass das Diagnosegerät um so enger an das zu diagnostizierende Gerät angepasst sein muss, je schneller und komfortabler die Diagnose sein soll. Um ein Haushaltsgerät zu vom Benutzer akzeptierten Kosten wirtschaftlich reparieren zu können, muss daher ein hoher Entwicklungsaufwand nicht nur bei dem Haushaltsgerät selbst, sondern auch bei dem daran angepassten Diagnosegerät getrieben werden.

Aufgabe der vorliegenden Erfindung ist, ein Haushaltsgerät bereitzustellen, das eine schnelle und sichere Fehlerdiagnose zumindest weitgehend ohne die Verwendung eines hoch spezialisierten Diagnosegeräts ermöglich.

Die Aufgabe wird gelöst, indem bei einem Haushaltsgerät mit einem Anzeigeschirm zum Anzeigen von mehreren Betriebsparametern des Haushaltsgeräts und wenigstens einem Eingabemittel zum Festlegen eines Sollwerts der Betriebsparameter sowie zum Umschalten zwischen wenigstens zwei Betriebsmodi die Betriebsmodi wenigstens einen Normalbetriebsmodus und einen Wartungsbetriebsmodus umfassen und die Menge der auf dem Anzeigeschirm anzeigbaren Betriebsparameter im Wartungsbetriebsmodus wenigstens genauso groß ist als im Normalbetriebsmodus.

Die Erfindung basiert auf der Einsicht, dass insbesondere bei modernen, digital gesteuerten Haushaltsgeräten die Anzahl der von einer Steuerschaltung erfassten und für die Betriebssteuerung ausgewerteten Parameter wesentlich größer ist als die Zahl der Parameter, die der Benutzer im Allgemeinen zu kennen braucht, um den Betrieb des Haushaltsgeräts zu steuern oder sich des ordnungsgemäßen Betriebs des Geräts zu vergewissern, dass aber die Betriebsparameter, die von der Steuerung eines solchen Geräts erfasst und zu Steuerungszwecken ausgewertet werden, häufig auch diejenigen sind, anhand derer ein Wartungsfachmann die Ursache einer Störung identifizieren kann. Wenn diese Parameter unmittelbar auf dem Anzeigeschirm des Haushaltsgeräts anzeigbar sind, ist es nicht erforderlich, diese Parameter mit Hilfe eines Diagnosegeräts auszulesen und anzuzeigen. Somit können zahlreiche Fehler ohne Verwendung eines speziellen Diagnosegeräts diagnostiziert werden, und, sofern zur Identifizierung eines Fehlers ein Diagnosegerät überhaupt noch erforderlich ist, kann dieses einen reduzierten Funktionsumfang haben und erfordert dementsprechend weniger Entwicklungsaufwand.

Bevorzugt ist die Menge der im Wartungsbetriebsmodus anzeigbaren Betriebsparameter größer als im Normalbetriebsmodus.

Solange das Haushaltsgerät im Normalbetriebsmodus ist, ist nur ein reduzierter Satz von Betriebsparametern anzeigbar, der zweckmäßigerweise auf diejenigen beschränkt ist, die ein Benutzer kennen muss, um das Haushaltsgerät in störungsfreiem Zustand seinen Bedürfnissen entsprechend zu betreiben. So ist es für den Benutzer einfach, die Betriebsparameter zu ermitteln, die ihn interessieren, ohne sie mühsam aus irrelevanter oder unverstandener Information heraussuchen zu müssen.

Ein nicht zu einfaches Haushaltsgerät kann meist aufgegliedert werden in eine Steuerschaltung und mehrere von der Steuerschaltung gesteuerte Komponenten, die nicht ständig in Betrieb sind, sondern von der Steuerschaltung in Betrieb genommen werden, wenn der Wert wenigstens eines der Betriebsparameter eine vorgegebene Bedingung erfüllt. Dies führt in der Regel dazu, dass die einzelnen Komponenten miteinander koordiniert arbeiten, so dass im Normalbetriebsmodus die isolierte Wirkung des Betriebs einer einzelnen Komponente nicht ohne weiteres beobachtbar ist und folglich auch nicht ohne weiteres entschieden werden kann, ob ein beobachtetes Störungsbild auf eine bestimmte Komponente oder eine andere, zeitlich koordiniert arbeitende zurückzuführen ist. Um die Störungsdiagnose zu vereinfachen, ist vorzugsweise im Wartungsbetriebsmodus der Betrieb einer solchen Komponente unabhängig von der im Normalbetriebsmodus geltenden Bedienung möglich. Zu diesem Zweck kann der Komponente zumindest im Wartungsbetriebsmodus ein Eingabemittel zugeordnet sein, das einem Benutzer eine direkte Steuerung dieser Komponente ermöglicht. Außerhalb des Wartungsbetriebsmodus kann dem Eingabemittel eine andere Funktion zugeordnet sein.

Wenn das Eingabemittel benachbart zum Anzeigeschirm angeordnet ist, kann die Bedienung des Geräts vereinfacht werden, indem auf dem Anzeigeschirm in räumlicher Beziehung zu dem Eingabemittel ein die ihm zugeordnete Funktion veranschaulichendes Symbol angezeigt wird.

Vorzugsweise ist die im Wartungsbetriebsmodus dem Eingabemittel zugeordnete Komponente durch den Benutzer wählbar, z.B. indem der Benutzer die Komponente auf einer auf dem Anzeigeschirm angezeigten Liste von Komponenten markiert.

Damit der Benutzer die Wirkung eines von ihm an der Komponente vorgenommenen Steuereingriffs bequem verfolgen kann, ist zweckmäßigerweise in der Zeit, in der das Eingabemittel die direkte Steuerung der Komponente ermöglicht, ein von der Komponente beeinflusster Betriebsparameter auf dem Anzeigeschirm anzeigbar. Zweckmäßigerweise kann dieser angezeigte Parameter durch den Benutzer wählbar sein.

Es kommt auch eine indirekte Steuerung in Betracht, insbesondere der Art, dass im Wartungsbetriebsmodus durch den Benutzer ein Überprüfungsalgorithmus auslösbar ist, in dessen Verlauf die Komponente unabhängig von der Bedingung betrieben wird.

Zur Erleichterung der Fehlerdiagnose ist es hilfreich, wenn die Steuerschaltung eingerichtet ist, im Normalbetriebsmodus Ist-Werte wenigstens eines der Betriebsparameter aufzuzeichnen, die im Störungsfall abgefragt werden können, um die Ursache der Störung zu erkennen.

Um einem Benutzer die Suche nach der Ursache einer Störung zu erleichtern, kann die Steuerschaltung eingerichtet sein, die aufgezeichneten Ist-Werte mit vorgegebenen Störungsbildern zu vergleichen und bei Übereinstimmung der Ist-Werte mit einem der Störungsbilder eine für das Störungsbild spezifische Störungsmeldung zu erzeugen. Ein solcher Vergleich kann, zum Beispiel ausgelöst von einem Benutzer, im Wartungsbetriebsmodus stattfinden; zweckmäßig ist aber auch, dass die Steuerschaltung ihn im Normalbetriebsmodus selbständig durchführt, so dass bereits beim Auftreten einer Störung eine auf die vermutliche Ursache hinweisende Störungsmeldung erzeugt werden kann.

Wenn die erzeugte Störungsmeldung unmittelbar, vorzugsweise auf dem Anzeigeschirm, ausgegeben wird, kann ein Benutzer, wenn er zur Behebung der Störung einen Servicetechniker rufen muss, diesem die vermutliche Störungsursache mitteilen. Wenn der Techniker daraufhin die voraussichtlich zur Störungsbehebung benötigten Ersatzteile mitbringt, ist die Wahrscheinlichkeit hoch, dass das Gerät an seinem Standort und mit einem einzigen Technikerbesuch repariert werden kann.

Zweckmäßig ist aber auch, die erzeugten Fehlermeldungen, vorzugsweise verknüpft mit der Zeit ihres Auftretens, zu speichern, so dass der Servicetechniker sie zeitversetzt auslesen und aus der Gesamtheit der in einem gegebenen Zeitraum aufgetretenen Fehlermeldungen auf die Ursache einer Störung schließen kann.

Besonders vorteilhaft ist in diesem Zusammenhang, wenn die Steuerschaltung eingerichtet ist, die aufgezeichneten Istwerte - vorzugsweise im Wartungsbetriebsmodus - auf dem Anzeigeschirm auszugeben. Da kein Diagnosegerät angeschlossen werden muss, um die aufgezeichneten Ist-Werte wahrnehmbar zu machen, verringert sich der Reparaturaufwand um die sonst zum Auf- und Abbau des Diagnosegeräts benötigte Zeit.

Als Komponente im Sinne der Erfindung kommt jede steuerbare Baugruppe des Haushaltsgeräts in Betracht. Wenn das erfindungsgemäße Haushaltsgerät ein Kältegerät ist, kann dies insbesondere ein Verdichter, ein Ventilator, eine Heizung, ein Eisbereiter sein.

Um Fehlbedienungen des Geräts im Wartungsbetriebsmodus zu verhindern, ist es zweckmäßig, wenn die Umschaltung vom Normalbetriebsmodus in den Wartungsbetriebsmodus durch einen Schlüssel gesichert ist, der normalerweise nur einem Wartungstechniker, nicht aber einem Benutzer des Haushaltsgeräts zur Verfügung steht. Der Schlüssel kann körperlicher wie auch abstrakter Natur sein.

Wenn das Eingabemittel des Haushaltsgeräts eine Mehrzahl von Tasten umfasst (die vorzugsweise im Normalbetriebsmodus zur Steuerung diverser Betriebsparameter des Gerätes dienen), kann der Schlüssel einfach aus einer vorgegebenen Abfolge der Betätigung der Tasten bestehen, die die Umschaltung in den Wartungsbetriebsmodus zur Folge hat, oder er kann eine Mehrzahl von Tasten spezifizieren, deren gleichzeitige Betätigung die Umschaltung in den Wartungsbetriebsmodus zur Folge hat.

Weitere Merkmale und Vorteile der Erfindung ergeben sich aus der nachfolgenden Beschreibung von Ausführungsbeispielen unter Bezugnahme auf die beigefügten Figuren.
Es zeigen:
- Fig.1: eine perspektivische Ansicht eines erfindungsgemäßen Haushaltsgeräts;
- Fig. 2: ein Blockdiagramm, das schematisch einzelne Komponenten des Kältegeräts und deren Steuerung zeigt;
- Fig. 3: das Bedienfeld des Kältegeräts im ungestörten Normalbetriebsmodus;
- Fig. 4: das Bedienfeld im Falle einer Störung;
- Fig.5: das Bedienfeld nach Quittierung der Störung durch einen Benutzer;
- Fig. 6: das Bedienfeld nach Kenntnisnahme der auf dem Bedienfeld der Fig. 5 angezeigten Information durch den Benutzer;
- Fig. 7: ein alternatives Erscheinungsbild des Bedienfeldes nach Kenntnisnahme von Störungsinformation durch den Benutzer;
- Fig.8: eine Statusanzeige des Bedienfeldes im Wartungsbetriebsmodus;
- Fig. 9: eine Fehlerliste im Wartungsbetriebsmodus;
- Fig. 10: das Bedienfeld, auf dem über das Anzeigebild der Fig. 9 anwählbare Detailinformation angezeigt ist;
- Fig. 11: das Bedienfeld mit einem darauf angezeigten Komponentenauswahlmenu; und
- Fig. 12: das Bedienfeld mit einem darauf angezeigten Testauswahlmenu.

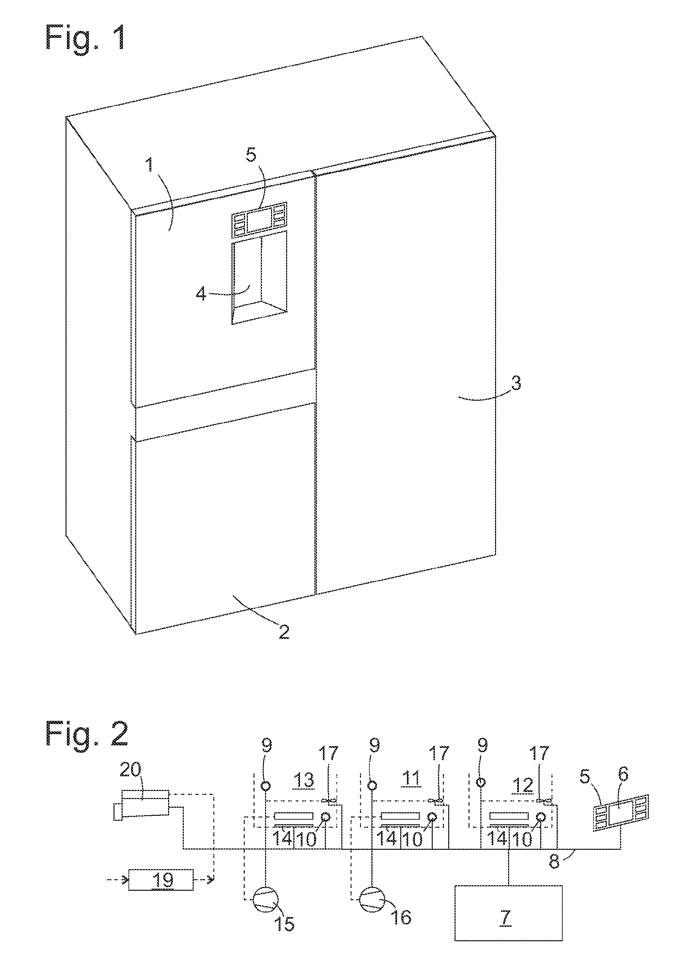

Fig. 1 ist eine perspektivische Ansicht eines erfindungsgemäßen Kältegeräts mit drei Lagerkammern, einem Gefrierfach, das hinter einer linken oberen Tür 1 des Geräts untergebracht ist, einem Frischkühlfach hinter einer linken unteren Tür 2 und einem Normalkühlfach hinter einer rechten Tür 3. In die linke obere Tür 1 ist eine Nische 4 für einen Eis- und Wasserspender eingelassen. Über der Nische befindet sich ein Bedienfeld 5 mit einem zentralen Anzeigeschirm und diesen rechts und links flankierenden Tasten, über die in einem Normalbetriebsmodus Betriebsparameter des Geräts wie etwa Solltemperaturen der Lagerkammern einstellbar sind.

Fig. 2 ist ein Blockdiagramm, das eine - nicht erschöpfende - Übersicht über die Komponenten des Kältegeräts aus Fig. 1 liefert. Ein Mikrocontroller 7 ist über einen digitalen Datenbus 8 verbunden mit dem Anzeigeschirm 6, Temperaturfühlern 9, 10 im Gefrierfach 11, dem Frischkühlfach 12 bzw. dem Normalkühlfach 13, mit elektrischen Heizungen 14 und Ventilatoren 17 in den drei Fächern, mit Verdichtern 15, 16, von denen der eine das Normalkühlfach 13 und der andere das Gefrierfach 11 und das Frischkühlfach 12 mit Kältemittel versorgt, mit einem über einen Wasserfilter 19 gespeisten Eisbereiter 20 und gegebenenfalls anderen Komponenten. Der Eisbereiter 20 kann im Sinne der vorliegenden Erfindung in weitere einzeln steuerbare Komponenten aufgegliedert sein, wie etwa Motoren zum Antreiben einer Bewegung von Eisformen oder Kühlfingern, eines Crushers, einer Ausgabeklappe etc., und an den Bus angeschlossene Sensoren, z.B. zur Überwachung der Eisbildung, des Wasserstandes in einem Eisbildungsbehälter sowie des Füllstandes eines Eisvorratsbehälters aufweisen.

Die Fächer 11, 12, 13 können in No-Frost-Bauweise aufgebaut sein, das heißt sie sind jeweils unterteilt in eine Lagerkammer und eine davon abgetrennte Verdampferkammer, die einen vom Verdichter 15 oder 16 gespeisten Verdampfer und die Heizung 14 aufnimmt, und in einem Durchgang zwischen den zwei Kammern ist ein von dem Mikrocontroller 7 gesteuerter Ventilator 17 angebracht, der den Luftaustausch zwischen beiden Kammern antreibt. Von den zwei Temperaturfühlern 9, 10 eines jeden Fachs 11, 12, 13 ist der eine, 9, in der Lagerkammer untergebracht, der andere, 10, hingegen in der Verdampferkammer.

In einem Normalbetriebsmodus des Mikrocontrollers 7 steuert dieser den Betrieb des einem der Fächer 11, 12, 13 zugeordneten Verdichters 15 oder 16 anhand der vom Temperaturfühler 9 des betreffenden Fachs erfassten Temperatur und zeigt diese Temperatur für einen Benutzer sichtbar auf dem Anzeigeschirm 6 an. Die vom Temperaturfühler 10 in der Verdampferkammer erfasste Temperatur wird nicht angezeigt. Letztere wird lediglich vom Mikrocontroller 7 intern benutzt, um anhand eines Vergleichs zwischen den Temperaturen der beiden Fühler 9, 10 auf die Stärke der Vereisung des Verdampfers rückzuschließen und, wenn diese als zu hoch erkannt wird, den Ventilator 17 und den Verdichter aus- und die Heizung 14 einzuschalten, um den Verdampfer abzutauen. Auch bei einer Kammer in Coldwall-Bauweise kann mit Hilfe von zwei unterschiedlich nah am Verdampfer platzierten Temperaturfühlern das Ausmaß der Vereisung des Verdampfers abgeschätzt werden. In diesem Fall führt die Feststellung einer übermäßigen Vereisung dazu, dass ein Warnhinweis an den Benutzer auf den Anzeigeschirm 6 ausgegeben wird, um diesen zum Abtauen des betroffenen Verdampfers zu veranlassen.

Der Mikrocontroller 7 speichert in regelmäßigen Zeitabständen die von den Temperaturfühlern 9, 10 gemeldeten Temperaturen für eine begrenzte Zeitspanne. Alternativ oder ergänzend kann er Zeiten erfassen, an denen die Temperaturen in einem der Fächer 11, 12, 13 außerhalb eines für das betreffende Fach vorgegebenen Temperaturbereichs liegt und eine Störung sowie die Zeit ihres Auftretens aufzeichnen, wenn die Zeitspanne, in der die Temperatur außerhalb des zulässigen Bereichs liegt, eine vorgegebene Dauer überschreitet.

Ein zwischen jedem Temperaturfühler 9, 10 und dem Bus 8 vorgesehene Busschnittstelle zum Digitalisieren und Übertragen der Messwerte des Temperaturfühlers auf den Bus 8 ist ausgelegt, um auf Befehl des Mikrocontrollers 7 eine Widerstandsmessung an dem Temperaturfühler 9 oder 10 vorzunehmen. Liegt dieser außerhalb eines Normalbereichs, kann der Mikrocontroller 7 auf eine Störung des betreffenden Temperaturfühlers schließen und einen entsprechende Störungsmeldung aufzeichnen und/oder auf dem Anzeigeschirm 6 ausgeben.

Anhand des zeitlichen Verlaufs der gemessenen Temperaturen erkennt der Mikrocontroller 7 diverse andere Störungsbilder. So kann zum Beispiel ein wiederholter langsamer Temperaturabfall an beiden Fühlern 9, 10 bei Inbetriebnahme des Verdichters 15 bzw. 16 auf einen Effektivitätsverlust des Verdichters hinweisen; ein schneller Temperaturabfall am verdampfernahen Fühler 10 kombiniert mit einem langsamen Abfall am Fühler 9 auf eine Störung des Ventilators, etc.

Der Mikrocontroller 7 lässt sich durch eine Benutzereingabe am Bedienfeld den Einabu eines neuen Wasserfilters 19 bestätigen. So kann er eine Warnung erzeugen, wenn die Zeit seit dem Einbau des Filters 19 sich einer vorgegebenen maximalen Standzeit nahe kommt oder diese überschreitet.

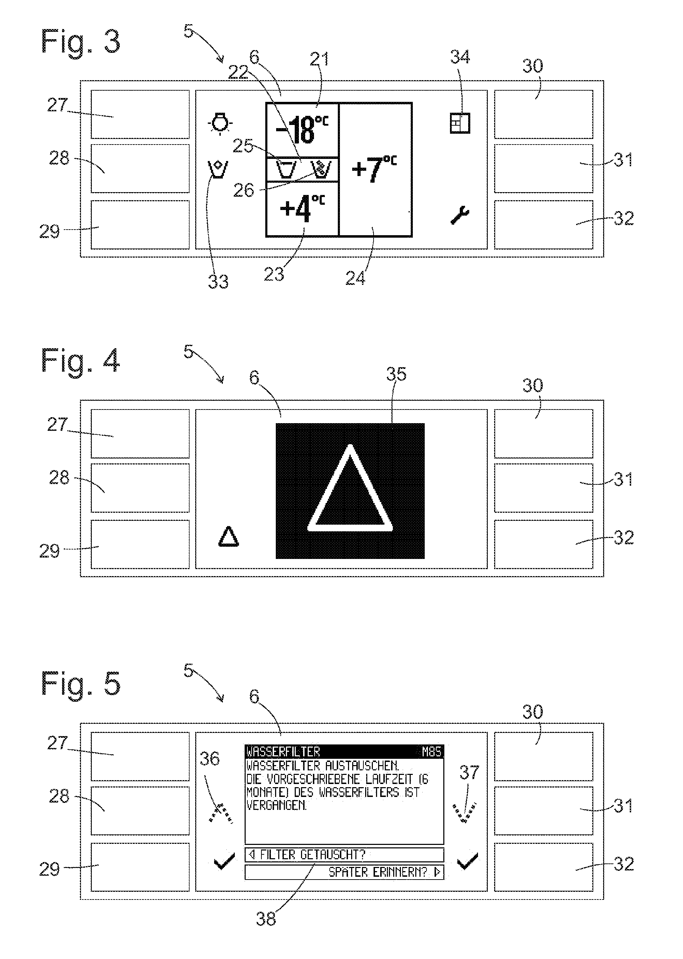

Fig. 3 zeigt eine Draufsicht auf das Bedienfeld 5 in einem Normalbetriebsmodus des Kältegeräts. Auf dem Anzeigeschirm 6 sind zentral mehrere Anzeigefelder 21, 22, 23, 24 angeordnet, deren Anordnung schematisch die Vorderansicht des Geräts nachbildet. Die drei übereinander angeordneten Anzeigefelder 21, 22, 23 entsprechen dem Gefrierfach 11 bzw. der Tür 1, dem Eis-/Wasserspender sowie dem Frischkühlfach 12 bzw. der Tür 2. Das dem Normalkühlfach 13 bzw. der Tür 3 zugeordnete Anzeigefeld 24 hat dieselbe Höhe wie die anderen drei Anzeigefelder zusammen.

In den einem Lagerfach zugeordneten Anzeigefeldern 21, 23, 24 sind von dem Temperaturfühler 9 des entsprechenden Lagerfachs gemessene Temperaturen angezeigt. Das Anzeigefeld 22 des Eis-/Wasserspenders enthält zwei für den Betriebszustand des Eis-/Wasserspenders repräsentative Symbole 25, 26, von denen das eine, 25, die Bereitschaft des Spenders zur Abgabe von Kaltwasser und das andere, 26, die Bereitschaft zur Abgabe von zerkleinertem Eis anzeigt und die ausgeschaltet werden, wenn ein Vorrat an Kaltwasser bzw. an Eis erschöpft ist.

Die Anzeigefelder 21 bis 24 sind seitlich umgeben von veränderbaren Symbolen, die jeweils die gegenwärtig einer ihnen benachbarten Taste 27 bis 32 zugewiesenen Funktionen darstellen. So führt zum Beispiel die Betätigung der Taste 28 dazu, dass das benachbart zu ihr angezeigte Symbol 33 seinen Platz mit dem Symbol 26 tauscht und der Eis-/Wasserspender auf die Ausgabe von Eisstücken anstelle von zerkleinertem Eis umschaltet.

Benachbart zur Taste 30 ist ein Symbol 34 dargestellt, das einer verkleinerten Darstellung der Anzeigefelder 21 bis 24 oder einer schematischen Vorderansicht des Geräts gleicht. Die Betätigung der Taste 30 versetzt das Gerät in einen Programmiermodus, in dem Betriebsparameter der einzelnen Lagerfächer 11, 12, 13 sowie des Eis-/Wasserspenders veränderbar sind. Ausgehend vom Anzeigebild der Fig. 3 bewirkt die einmalige Betätigung der Taste 30 den Übergang zu einem Anzeigebild, in dem das Anzeigefeld 21 des Gefrierfachs 11 invertiert dargestellt wird und neben den Tasten 28, 31 Minus- und Pluszeichen dargestellt werden, und dass durch Betätigen der Tasten 28, 31 die in dem invertierten Anzeigefeld 21 angezeigte Solltemperatur des Gefrierfachs dekrementiert bzw. inkrementiert wird.

Durch erneute Betätigung der Taste 30 wird das Anzeigefeld 22 invertiert, und neben einer der Tasten 27 bis 29, 31, 32 wird ein Ein-/Ausschaltsymbol angezeigt, so dass durch Betätigen der betreffenden Taste der Eisbereiter 20 ein- oder ausgeschaltet werden kann.

Durch eine weitere Betätigung der Taste 30 wird das Anzeigefeld 23 invertiert, und die Solltemperatur des Frischkühlfachs 12 kann genauso programmiert werden wie oben für das Gefrierfach 11 beschrieben.

Durch nochmalige Betätigung der Taste 30 wird das Anzeigefeld 24 invertiert und die Temperatur des Normalkühlfachs 13 wird programmierbar. Eine abermalige Betätigung der Taste 30 führt zum Anzeigebild der Fig. 3 zurück.

Wenn der Mikrocontroller 7 im Betrieb des Kältegeräts eine Störung feststellt, zeigt er anstelle der Felder 21 bis 24 ein großes Warnsymbol 35 an, wie in Fig. 4 gezeigt, und nur eine Taste, hier die Taste 29, ist noch mit einer Funktion belegt. Betätigt der Benutzer diese Taste 29, so gelangt er zu einem Anzeigebild mit einer Textmeldung, die dem Benutzer die aufgetretene Störung erläutert und, soweit möglich oder nötig, Hinweise zu ihrer Behebung gibt, wie exemplarisch in Fig. 5 gezeigt. Im Fall der Fig. 5 betrifft die Fehlermeldung den Wasserfilter 19, und der Benutzer wird aufgefordert, ihn auszuwechseln. Die Fehlermeldung ist kurz und ihr gesamter Text kann gleichzeitig auf dem Anzeigeschirm 6 angezeigt werden. Falls eine längere Fehlermeldung angezeigt werden muss, erscheinen Scrollsymbole 36, 37 neben den Tasten 28, 31, so dass der Benutzer durch Betätigen dieser Tasten die Fehlermeldung durchscrollen und vollständig lesen kann.

Der Benutzer kann die Fehlermeldung auf unterschiedliche Weise, über die Tasten 29 oder 32, quittieren. Ein angezeigter Text 38 weist den Benutzer darauf hin, dass die Taste 29 betätigt werden soll, wenn die Störungsursache beseitigt ist, und die Taste 32, wenn die Störungsursache nicht beseitigt ist.

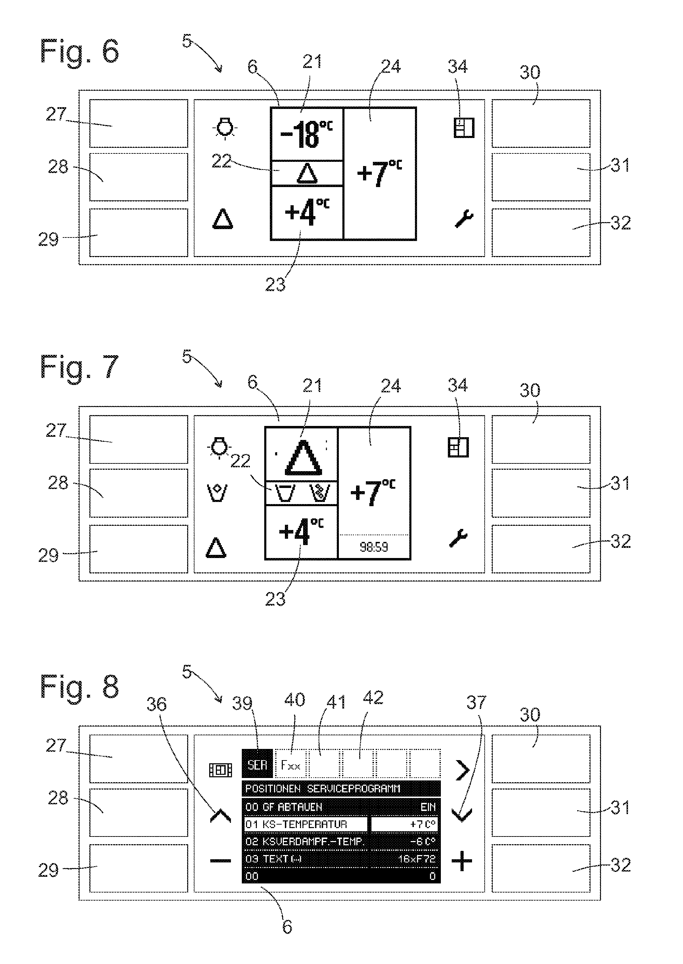

Wenn der Benutzer die Taste 32 betätigt hat, erscheint auf dem Anzeigeschirm 6 das in Fig. 6 gezeigte Anzeigebild. Im Anzeigefeld 22 des Eis-/Wasserspenders erscheint ein Warnsymbol, und ein weiteres neben der Taste 29 angezeigtes Warnsymbol weist den Benutzer darauf hin, dass er die Warnmeldung der Fig. 4 durch Betätigen der Taste 29 erneut abfragen kann. Die übrigen Elemente des Anzeigebildes sind dieselben wie mit Bezug auf Fig. 3 erläutert.

Nach Quittierung der Störungsmeldung durch den Benutzer erscheint ein Störungssymbol immer in demjenigen Anzeigefeld, das zu dem von der Störung betroffenen Teil des Kältegeräts gehört. D.h., wenn zum Beispiel eine Störung am Gefrierfach 11 erkannt wird, wird das Anzeigebild der Fig. 7 angezeigt, bei dem ein Störungssymbol das Anzeigefeld 21 einnimmt.

Auch hier ist über Taste 29 eine Störungsmeldung abfragbar, die der Benutzer, wenn er die Störung nicht selbst beheben kann oder will, einem Servicetechniker mitteilen kann, so dass dieser bereits vor einer Inaugenscheinnahme des Geräts die möglichen Störungsursachen eingrenzen und sich für eine eventuell erforderliche Reparatur geeignet vorbereiten kann.

Um dem Servicetechniker die Fehlersuche zu erleichtern, ist der Mikrocontroller 7 in einen Wartungsbetriebsmodus umschaltbar durch Eingabe eines Schlüssels in Form einer vorgegebenen Abfolge von Betätigungen der Tasten 27 bis 32 oder einer Mehrzahl von gleichzeitig zu betätigenden Tasten, z.B. der Tasten 27, 30, 31. Fig. 8 zeigt ein Start-Anzeigebild des Wartungsbetriebsmodus. Der Wartungsbetriebsmodus ist gegliedert in mehrere Untermodi, denen jeweils ein Symbol 39, 40, 41 oder 42 in einem oberen Bereich des Anzeigeschirms 6 zugeordnet ist. Das in Fig. 8 invertierte Symbol 39 zeigt an, dass sich das Gerät in dem diesem Symbol 39 zugeordneten Untermodus, hier als Servicemodus bezeichnet, befindet. Im Servicemodus ist eine vollständige Liste der von den diversen Sensoren des Geräts erfassten Messwerte, der Betriebszustände einzelner Komponenten etc. abfragbar. Die Steuerung der Komponenten findet im Servicemodus nach dem gleichen Programm statt wie im Normalbetriebsmodus, d.h. der Servicemodus ermöglicht dem Techniker, Einblick in die Funktion des Geräts zu nehmen, beeinflusst diese aber nicht.

Die Liste hat mehr Einträge, als gleichzeitig auf dem Anzeigeschirm 6 darstellbar sind. Scrollsymbole 36, 37 neben den Tasten 28, 31 verdeutlichen dem Benutzer, dass er mit Hilfe dieser Tasten die Liste durchscrollen und einen einzelnen Eintrag der Liste selektieren kann. Der Servicetechniker hat so die Möglichkeit, in kürzester Zeit eine Vielzahl von Betriebsparametern des Geräts zu ermitteln und anhand von deren Werten die Ursachen einer eventuellen Störung einzugrenzen, ohne dass das Gerät geöffnet bzw. ein Meß- oder Diagnosegerät daran angeschlossen werden müsste.

Die Liste enthält Einträge, bei denen, wenn einer von ihnen selektiert ist, Plus- und Minuszeichen auf dem Anzeigeschirm 6 neben den Tasten 29, 32 erscheinen. Diese Einträge betreffen Offsetwerte, die zu den Ausgabewerten der Sensoren hinzuaddiert werden, um eine Ungenauigkeit der Sensoren zu kompensieren oder um eine systematische Abweichung auszugleichen, die z.B. daraus resultieren kann, dass ein Temperatursensor nicht exakt an dem Ort platziert werden kann, dessen Temperatur der Steuerung zugrunde gelegt werden soll. Diese Offsetwerte sind im Servicemodus mit Hilfe der Tasten 29, 32 veränderbar.

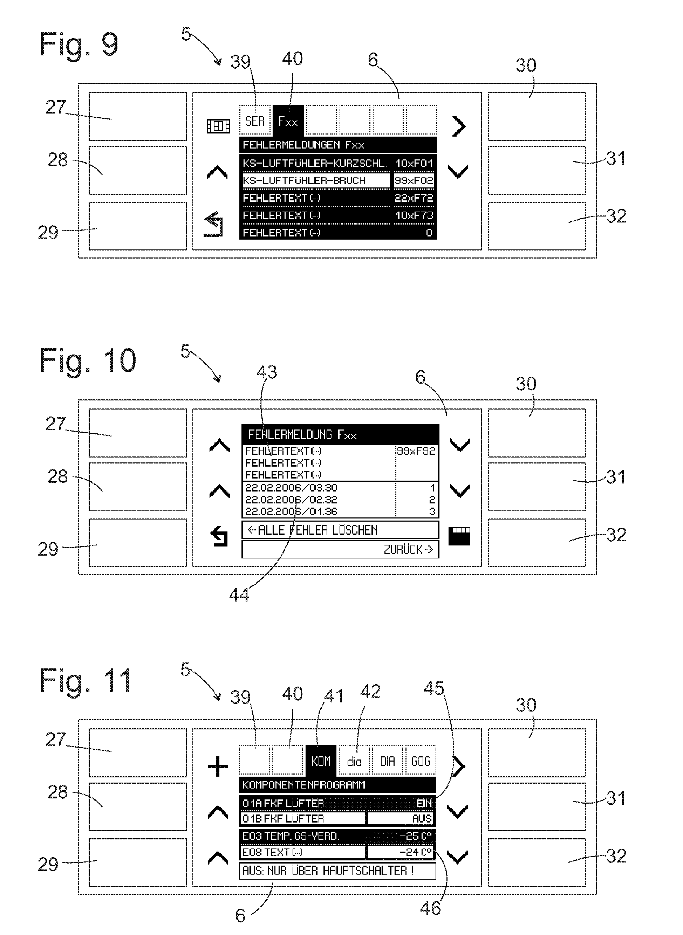

Mit Hilfe der Taste 30 kann der Techniker zu einem anderen Untermodus wechseln, wie etwa demjenigen der Fig. 9, in dem ihm eine Liste von Fehlern angezeigt wird, die der Mikrocontroller 7 während eines vorhergegangenen Betriebszeitraums erkannt und aufgezeichnet hat. Jeder Eintrag der Liste entspricht einem Fehlertyp, und die Liste spezifiziert zu jedem Fehlertyp, wie häufig dieser aufgetreten ist. Mit Hilfe der Scrolltasten 28, 31 kann der Servicetechniker einen Fehlertyp auswählen. Bestätigung der Auswahl mittels der Taste 29 führt zum Anzeigebild der Fig. 10. In einem oberen Bereich 43 des Anzeigebildes erhält er Erläuterungen zu dem Fehlertyp, die er mit Hilfe der Tasten 27, 30 scrollen kann. In einem mittleren Bereich 44 wird eine Liste mit Detailinformationen, insbesondere über den Zeitpunkt des Auftretens jedes einzelnen Fehlers vom ausgewählten Typ, angezeigt. Die benachbarten Tasten 28, 31 dienen zum Scrollen der Liste. Es besteht die Möglichkeit, die Fehler mit Hilfe der Taste 29 zu löschen oder ohne Löschen über die Taste 32 zum Anzeigebild der Fig. 9 zurückzukehren.

In analoger Weise zu den Fehlern können dem Techniker auch aufgezeichnete zeitliche Verläufe von aus der Liste der Fig. 8 wählbaren Betriebsparametern zur Einsichtnahme angeboten werden.

Ein als Komponentenmodus bezeichneter weiterer Untermodus des Wartungsbetriebsmodus ist in Fig. 11 dargestellt. Hier ist der Anzeigeschirm unterhalb der Leiste der Symbole 39 - 42 in zwei jeweils mit Hilfe der seitlich benachbarten Tasten 28, 31 bzw. 29, 32 scrollbare Listen 45, 46 gegliedert. Die Liste 45 enthält alle Komponenten des Geräts, die einzeln vom Mikrocontroller 7 ein- und ausgeschaltet oder in ihren Betriebsparametern verändert werden können, wie etwa die Verdichter 15, 16, die Heizungen 14 und die Ventilatoren 17 der Fächer 11, 12, 13, der Crusherantrieb des Eisbereiters etc. Die Liste 46 enthält eine Auswahl von Betriebsparametern aus der Liste der Fig. 8. Durch Scrollen mit Hilfe der Tasten 29, 32 kann der Techniker einen Betriebsparameter der Liste 46 zur Anzeige bringen, dessen Reaktion auf eine Umschaltung einer in der Liste 45 ausgewählten Komponente ihn interessiert. Indem er anschließend die Komponente mit Hilfe der Taste 28 ein- oder ausschaltet, kann er die Auswirkungen auf den angezeigten Betriebsparameter unmittelbar verfolgen, ohne dafür ein Messgerät anbringen oder auch nur das Gehäuse des Geräts öffnen zu müssen. So ist eine exakte Fehlerdiagnose in kurzer Zeit und mit minimalem Aufwand möglich. Außerdem kann er auf diese Weise Funktionsgruppen zu jeder beliebigen Zeit in Aktion beobachten und nicht nur dann, wenn der Mikrocontroller 7 sie gemäß den in seinem Betriebsprogramm definierten Bedingungen einschaltet. D.h. beispielsweise kann der Verdichter 15 oder 16 oder ein Ventilator zu jeder beliebigen Zeit eingeschaltet werden und nicht nur dann, wenn in einem von ihm gekühlten Fach Kältebedarf besteht.

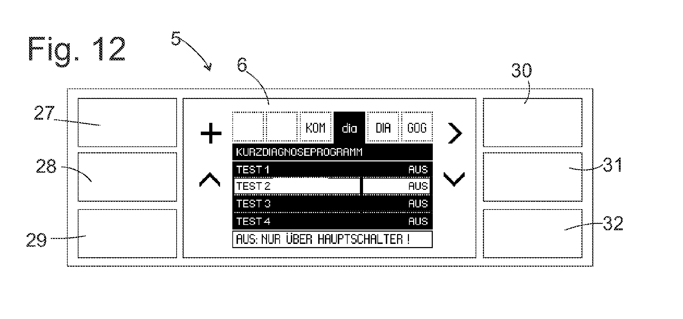

Im Diagnose-Untermodus der Fig. 12 wird dem Techniker eine Liste von Diagnoseroutinen zur Auswahl angeboten, die der Mikrocontroller 7 auszuführen in der Lage ist, die aber nicht zu seinem im Normalbetriebsmodus ausgeführten Betriebsprogramm gehören. Derartige Diagnoseroutinen können zur Erkennung von Fehlern vorgesehen sein, die im Komponentenmodus nur schwer diagnostizierbar sind, sei es, weil zu ihrer Erkennung koordinierte Steuerzugriffe auf mehrere Komponenten erforderlich sind oder weil die Auswertung von infolge der Steuerzugriffe gewonnenen Daten einen hohen Rechenaufwand erfordert.

## Patentansprüche

1. Haushaltsgerät mit einem Anzeigeschirm (6) zum Anzeigen von Werten von Betriebsparametern des Haushaltsgeräts und wenigstens einem Eingabemittel (27-32) zum Festlegen eines Sollwerts der Betriebsparameter sowie zum Umschalten zwischen wenigstens zwei Betriebsmodi, **dadurch gekennzeichnet, dass** die Betriebsmodi wenigstens einen Normalbetriebsmodus und einen Wartungsbetriebsmodus umfassen und dass die Menge der auf dem Anzeigeschirm (6) anzeigbaren Betriebsparameter im Wartungsbetriebsmodus zumindest genauso groß ist als im Normalbetriebsmodus.

2. Haushaltsgeräte nach Anspruch 1, **dadurch gekennzeichnet, dass** die Menge der auf dem Anzeigeschirm (6) anzeigbaren Betriebsparameter im Wartungsbetriebsmodus größer als im Normalbetriebsmodus ist.

3. Haushaltsgerät nach Anspruch 1 oder 2, **dadurch gekennzeichnet, dass** es eine Steuerschaltung (7) und mehrere von der Steuerschaltung (7) gesteuerte Komponenten umfasst, wobei die Steuerschaltung (7) eingerichtet ist, im Normalbetriebsmodus eine dieser Komponenten (15, 16) nur zu betreiben, wenn der Wert wenigstens eines der Betriebsparameter eine vorgegebene Bedingung erfüllt, und im Wartungsbetriebsmodus die Komponente (15, 16) unabhängig von der Bedingung entsprechend einer Benutzereingabe zu betreiben.

4. Haushaltsgerät nach Anspruch 3, **dadurch gekennzeichnet, dass** zumindest im Wartungsbetriebsmodus der Komponente (15, 16) ein Eingabemittel (27) zugeordnet ist, das einem Benutzer eine direkte Steuerung der Komponente (15, 16) ermöglicht.

5. Haushaltsgerät nach Anspruch 4, **dadurch gekennzeichnet, dass** in dem Wartungsbetriebsmodus die dem Eingabemittel (27) zugeordnete Komponente durch den Benutzer wählbar ist.

6. Haushaltsgerät nach Anspruch 4 oder 5, **dadurch gekennzeichnet, dass** in dem Wartungsbetriebsmodus ein von der Komponente beeinflusster Betriebsparameter auf dem Anzeigeschirm (46) anzeigbar ist.

7. Haushaltsgerät nach Anspruch 6, **dadurch gekennzeichnet, dass** der auf dem Anzeigeschirm (6) angezeigte Betriebsparameter durch den Benutzer wählbar ist.

8. Haushaltsgerät nach einem der Ansprüche 3 bis 7, **dadurch gekennzeichnet, dass** im Wartungsbetriebsmodus ein Diagnosealgorithmus auslösbar ist, in dessen Verlauf die Komponente unabhängig von der Bedingung betrieben wird.

9. Haushaltsgerät nach einem der Ansprüche 3 bis 8, **dadurch gekennzeichnet, dass** die Steuerschaltung (7) eingerichtet ist, im Normalbetriebsmodus Istwerte wenigstens eines der Betriebsparameter aufzuzeichnen.

10. Haushaltsgerät nach Anspruch 9, **dadurch gekennzeichnet, dass** die Steuerschaltung (7) eingerichtet ist, die aufgezeichneten Istwerte mit vorgegebenen Störungsbildern zu vergleichen und bei Übereinstimmung der Istwerte mit einem der Störungsbilder eine für das Störungsbild spezifische Störungsmeldung zu erzeugen.

11. Haushaltsgerät nach Anspruch 9 oder 10, **dadurch gekennzeichnet, dass** die Steuerschaltung (7) eingerichtet ist, die aufgezeichneten Istwerte auf dem Anzeigeschirm (6) auszugeben.

12. Haushaltsgerät nach einem der Ansprüche 1 bis 11, **dadurch gekennzeichnet, dass** es ein Kältegerät ist.

13. Haushaltsgerät nach Anspruch 12, **dadurch gekennzeichnet, dass** die Komponente zumindest unter den Komponenten Verdichter (15, 16), Ventilator (17), Heizung (14), Eisbereiter (20) auswählbar ist.

14. Haushaltsgerät nach einem der vorhergehenden Ansprüche, **dadurch gekennzeichnet, dass** die Umschaltung vom Normalbetriebsmodus in den Wartungsbetriebsmodus durch einen Schlüssel gesichert ist.

15. Haushaltsgerät nach Anspruch 14, **dadurch gekennzeichnet, dass** das Eingabemittel eine Mehrzahl von Tasten (27-32) umfasst und dass der Schlüssel eine Abfolge der Betätigung der Tasten (27-32) spezifiziert, die die Umschaltung in den Wartungsbetriebsmodus zur Folge hat, oder eine Mehrzahl von Tasten spezifiziert, deren gleichzeitige Betätigung die Umschaltung in den Wartungsbetriebsmodus zur Folge hat.
